Europäisches Patentamt

European Patent Office

Office européen des brevets

(19)

(11) Numéro de publication: **0 310 523**
**A1**

## (12) DEMANDE DE BREVET EUROPEEN

(21) Numéro de dépôt: 88420305.0

(22) Date de dépôt: 08.09.88

(51) Int. Cl.⁴: **A 47 J 36/14**

(30) Priorité: 08.09.87 FR 8712658

(43) Date de publication de la demande:
05.04.89 Bulletin 89/14

(84) Etats contractants désignés: **DE ES FR GB IT**

(71) Demandeur: **Terraillon**
**Route de Thonon Juvigny**
**F-74100 Annemasse (FR)**

(72) Inventeur: **Gagnepain, Didier**
**Plottes**
**F-71700 Tournus (FR)**

(74) Mandataire: **de Beaumont, Michel**
**Cabinet Poncet 7, chemin de Tillier B.P. 317**
**F-74008 Annecy Cédex (FR)**

(54) **Récipient à bord verseur.**

(57) Le récipient selon l'invention comporte un bord périphérique supérieur (4) de forme particulière : le bord périphérique supérieur (4) est limité par une face intérieure (6) arrondie se raccordant à la face intérieure (7) de jupe (1), et se raccordant selon une arête vive (9) à une tranche périphérique extérieure (8) légèrement inclinée vers le bas. La tranche périphérique extérieure (8) comporte avantageusement un décrochement (14). On définit ainsi un bord présentant d'excellentes qualités de versage.

Fig 1

EP 0 310 523 A1

Description

## RECIPIENT A BORD VERSEUR

La présente invention concerne les récipients à bord verseur destinés à contenir des liquides.

L'invention s'applique en particulier aux ustensiles culinaires à usage domestique, tels que casseroles, faitouts, sauteuses, poêles.

De tels récipients comprennent généralement une jupe périphérique dont le pourtour inférieur se raccorde à un fond, et dont le pourtour supérieur est délimité par un bord périphérique supérieur définissant une ouverture supérieure.

En utilisation normale, on retire généralement les liquides hors du récipient en inclinant le récipient sur le côté, de sorte que le liquide s'écoule progressivement en passant par-dessus une partie du bord périphérique supérieur du récipient.

Dans les récipients dont le bord périphérique supérieur présente une épaisseur relativement faible, par exemple de l'ordre de 0,5 à 1 millimètre, on constate généralement que le versement du liquide se fait correctement, selon un flux régulier.

Par contre, les récipients à bord périphérique supérieur épais, c'est-à-dire dont l'épaisseur est supérieure à 2 millimètres, ne permettent généralement pas un versage satisfaisant du liquide qu'ils contiennent. On peut constater ce défaut par le test ci-dessous.

Le récipient à tester est fixé sur un support mobile autour d'un axe horizontal permettant de l'incliner régulièrement. Le récipient étant horizontal, on le remplit au deux tiers de son volume avec du liquide.

On agit sur le support, de sorte que le récipient s'incline de façon progressive et continue à raison de quelques degrés par seconde, par exemple trois degrés par seconde, jusqu'à ce que la moitié du liquide environ soit versée.

Le récipient est ramené aussitôt, et avec la même vitesse vers sa position initiale.

Avec les récipients à bords périphériques supérieurs épais de types connus, on constate généralement la formation d'un écoulement en filet continu ou discontinu à l'extérieur le long de la jupe du récipient, au-dessous de la zone de passage du liquide.

On a pu constater en outre que la présence du défaut de versage dépend de la nature et de la température du liquide contenu dans le récipient. Ainsi, les défauts de versage sont plus fréquents avec un liquide tel que du lait chaud entier, et moins fréquents avec de l'eau froide.

On a tenté depuis longtemps de trouver des formes de bords verseurs permettant d'éviter les défauts de versage. Ainsi, le brevet US-A-2 151 727, déposé en 1938, décrit une bouteille de lait dans laquelle le goulot comprend un bord périphérique supérieur plat se raccordant à la face interne selon une première arête vive, et se raccordant à une facette périphérique externe supérieure selon une seconde arête vive, la facette périphérique supérieure se raccordant à une facette périphérique externe inférieure par un décrochement anguleux ou seuil inversé. L'expérience montre que le résultat n'est pas satisfaisant, et que des gouttes se forment sur la facette supérieure en fin de versage.

La présente invention a pour objet d'améliorer le versage des récipients tels que les casseroles, les sauteuses, les faitouts ou tous autres récipients, en permettant le versage de liquides, plus ou moins épais, plus ou moins chauds, sans écoulement de celui-ci en filets continus ou discontinus le long de la jupe.

Un autre objet de la présente invention est de résoudre ce problème de manière simple et peu onéreuse, sans augmenter sensiblement le coût de fabrication des récipients.

Pour atteindre ces objets ainsi que d'autres, un récipient selon l'invention présente un bord périphérique supérieur épais de forme particulière : dans au moins la partie de sa périphérie destinée au versage, le bord périphérique supérieur forme une proéminence périphérique annulaire, déportée vers l'extérieur du récipient par rapport à la surface générale définie par la jupe périphérique, et comprenant :
- une face intérieure incurvée se raccordant vers le bas à la face intérieure de la jupe périphérique,
- une tranche périphérique extérieure formant une facette orientée vers l'extérieur du récipient de manière à définir avec la surface supérieure du liquide, au début du versage, un angle aigu,
- la face intérieure incurvée du bord périphérique et la tranche périphérique extérieure se raccordant selon une arête supérieure vive. On entend par arête vive une zone de jonction dont le profil, selon un plan de coupe radial du récipient, présente une courbure de rayon inférieur à 0,5 millimètre qui relie deux faces formant un angle aigu.

Selon une autre caractéristique, le récipient selon l'invention comprend une tranche périphérique extérieure comportant un décrochement anguleux séparant une facette périphérique supérieure et une facette périphérique inférieure, la facette périphérique supérieure étant déportée vers l'extérieur du récipient par rapport à la facette périphérique inférieure.

La tranche périphérique extérieure est avantageusement inclinée vers le bas du récipient.

Selon une autre caractéristique, la facette périphérique supérieure présente une hauteur inférieure à 2 millimètres.

D'autres objets, caractéristiques et avantages de la présente invention ressortiront de la description suivante de modes de réalisation particuliers, faite en relation avec les figures jointes, parmi lesquelles :
- la figure 1 représente une vue de côté en coupe partielle d'un récipient selon la présente invention ;
- la figure 2 représente un récipient selon l'invention en position de versage ;
- la figure 3 représente une coupe radiale à l'échelle 10 d'un bord verseur de récipient selon un mode de réalisation particulier de l'invention ;
- la figure 4 représente une coupe radiale à l'échelle 10 d'un bord verseur de récipient selon un second mode de réalisation particulier de l'invention ; et

- la figure 5 représente une coupe radiale à l'échelle 10 d'un bord verseur de récipient selon un troisième mode de réalisation particulier de l'invention.

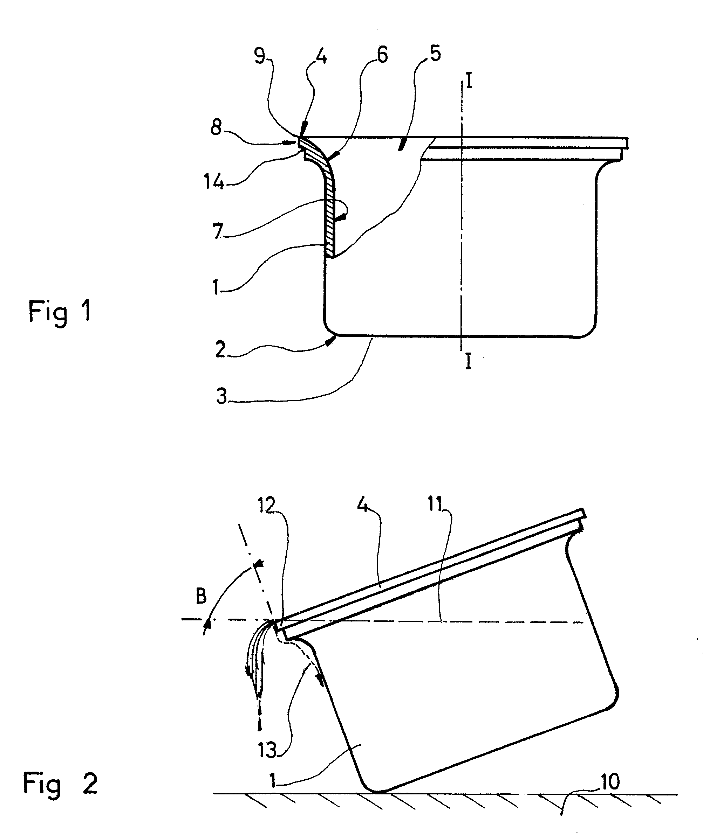

La figure 1 illustre la constitution générale d'un récipient tel qu'une casserole. Le récipient comprend une jupe périphérique 1 qui, dans le mode de réalisation représenté, a une forme cylindrique d'axe I-I. L'axe I-I forme axe vertical moyen du récipient lorsque celui-ci est posé sur un plan horizontal.

La jupe périphérique 1 se raccorde, selon son pourtour inférieur 2, au pourtour d'un fond 3 fermant la partie inférieure du récipient.

La jupe périphérique 1 est délimitée, selon son bord supérieur, par un bord périphérique supérieur 4 définissant une ouverture supérieure 5.

Le bord périphérique supérieur 4 forme, comme le représente la figure, une proéminence périphérique annulaire dépassant radialement vers l'extérieur du récipient par rapport à la surface définie par la jupe 1. Le bord périphérique supérieur 4 est délimité par une face intérieure 6 de bord périphérique, qui se raccorde vers le bas à la face intérieure 7 de la jupe périphérique 1, et qui se raccorde vers le haut à une tranche périphérique extérieure 8 selon une arête supérieure vive. 9.

La figure 2 illustre le problème résolu par la présente invention : lorsque l'on incline le récipient sur le côté, par rapport au plan horizontal 10, le liquide 11 contenu dans le récipient s'échappe latéralement et se déverse par-dessus une portion latérale 12 du bord périphérique 4. Dans un récipient dont les qualités de versage sont médiocres, le liquide tend à former un filet continu s'écoulant le long de la jupe 1 du récipient, comme le représente la ligne en pointillés 13.

Par contre, avec un récipient selon l'invention, le liquide 11 s'écarte franchement de la face extérieure de la jupe 1 et verse correctement.

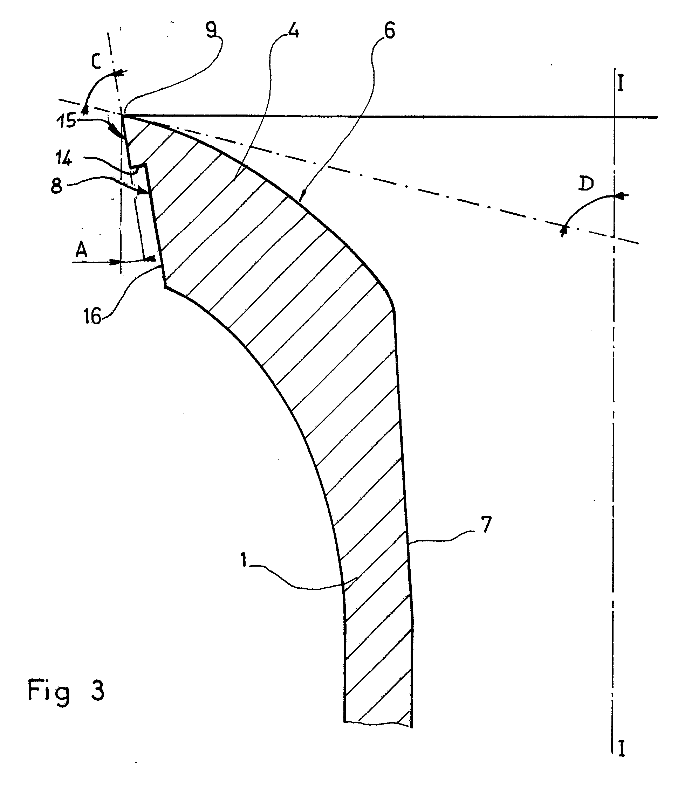

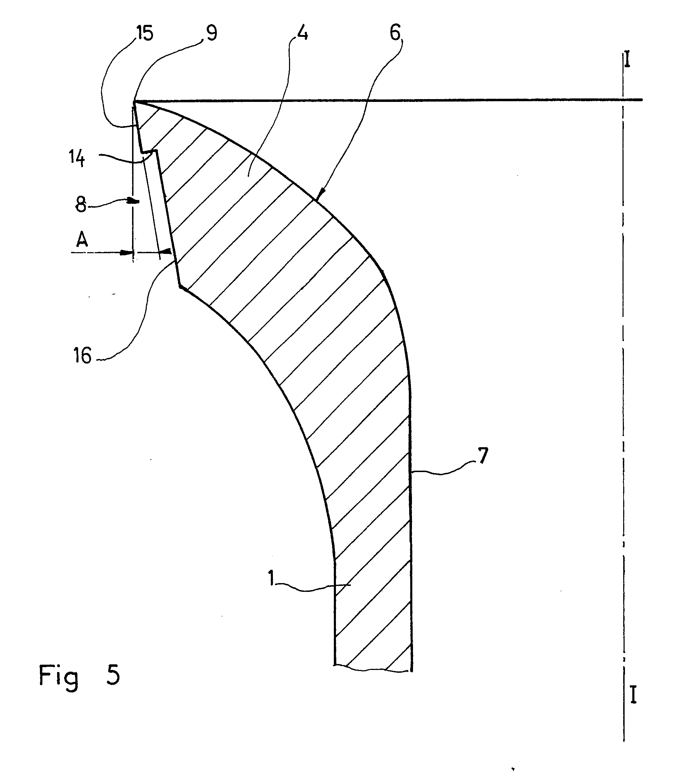

Pour obtenir un tel effet, le bord périphérique supérieur 4 peut comporter les formes particulières selon la présente invention. Les figure 3 à 5 illustrent trois modes de réalisation du bord 4, représenté en coupe radiale.

Dans tous ces modes de réalisation, la face intérieure 6 du bord périphérique supérieur est incurvée, inclinée et orientée vers le haut du récipient, comme le représentent les figures. Cette face intérieure 6 présente avantageusement un profil arrondi dont l'inclinaison augmente régulièrement depuis son raccordement à la face intérieure 7 de jupe périphérique 1, jusqu'à son raccordement à la tranche périphérique extérieure 8.

L'arête 9 est une arête vive dont les parois forment, en coupe radiale, un angle C aigu de 50 à 70° environ, raccordées par une zone courbe dont le rayon de courbure est inférieur à 0,5 millimètre.

La tranche périphérique extérieure 8 comprend un décrochement anguleux 14, séparant une facette périphérique supérieure 15 et une facette périphérique inférieure 16. La facette périphérique supérieure 15 est déportée vers l'extérieur du récipient par rapport à la facette périphérique inférieure 16.

La hauteur de la facette périphérique 15 doit de préférence être inférieure à 2 millimètres. En effet, une hauteur plus importante risque d'entraîner un mauvais versage. D'autre part, une hauteur trop faible risque de compromettre sa résistance mécanique. On peut avantageusement prévoir une facette périphérique supérieure 15 dont la hauteur est comprise entre 1 et 2 millimètres, une hauteur de 1,5 millimètres environ étant particulièrement bien adaptée à la réalisation des casseroles.

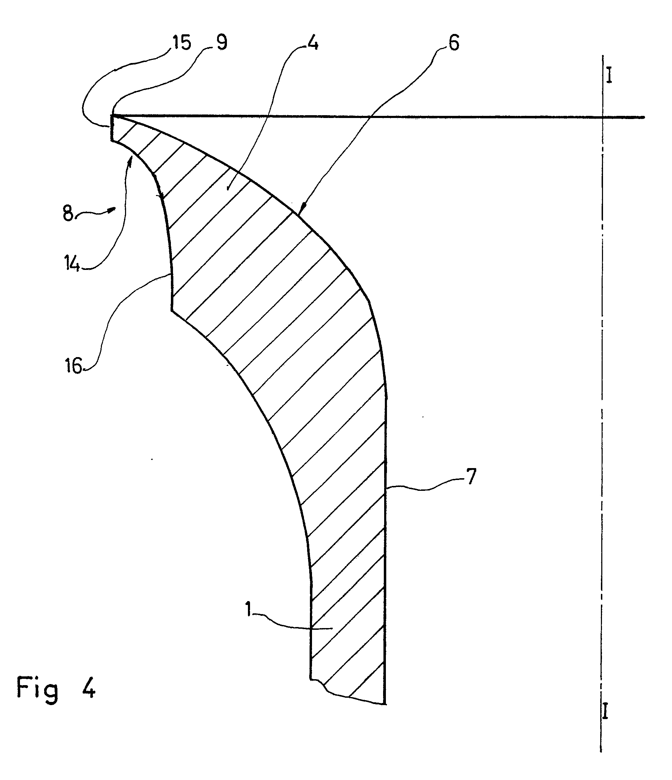

La profondeur du décrochement 14 peut être relativement faible, par exemple 4 à 12 dixièmes de millimètre, une profondeur de 10 dixièmes de millimètres environ étant bien adaptée pour la réalisation des casseroles. Dans le mode de réalisation de la figure 3, le fond du décrochement est anguleux. Par contre, dans le mode de réalisation de la figure 4, le fond du décrochement est arrondi, sans que cela nuise au versage.

Pour obtenir un versage correct, l'un des paramètres importants réside dans l'inclinaison relative de la tranche périphérique extérieure 8 par rapport à la direction de déplacement du liquide lors de sa sortie du récipient, et par rapport à la verticale pendant le versage. On constate qu'il faut que la tranche périphérique extérieure 8 soit telle que, pendant tout le versage, elle soit suffisamment inclinée vers le bas, et elle forme avec la direction de propagation du liquide un angle suffisamment important. Les conditions les plus critiques sont réalisées en début de versage, c'est-à-dire lorsque le niveau du liquide est au plus haut dans le récipient. En effet, en début de versage, le récipient présente l'inclinaison minimale, cette inclinaison augmentant progressivement au cours du versage. Selon l'invention, on définit l'orientation correcte de la tranche périphérique extérieure du récipient en la situant par rapport à la surface du liquide en début de versage. A cet instant, on considère qu'il faut que la tranche périphérique extérieure 8 forme, avec la surface supérieure du liquide en début de versage, un angle B aigu, c'est-à-dire inférieur à 90°. On pourra préférer que cet angle B soit inférieur à 70°.

La définition ci-dessus de l'orientation de la tranche périphérique extérieure 8 par rapport au niveau de liquide en début de versage permet de calculer ou de définir empiriquement l'orientation de cette même tranche périphérique extérieure 8 par rapport à la jupe périphérique 1 du récipient ou par rapport à son fond 3. On comprendra en effet que l'orientation de la tranche périphérique extérieure 8 par rapport à la jupe périphérique 1 dépend des proportions générales du corps de récipient lui-même, et dépend des conditions de remplissage normal de récipient. Ainsi, si l'on veut obtenir des conditions de versage correct lorsque le récipient est rempli au trois quarts, il faudra prévoir une tranche périphérique extérieure 8 relativement très inclinée vers le bas du récipient. Par contre, si l'on veut que le récipient verse correctement lorsqu'il est rempli à moitié seulement, on pourra se satisfaire d'une tranche périphérique extérieure 8 relativement peu inclinée vers le bas.

Les orientations définies dans la présente invention, et notamment dans la revendication 1, permettent de concevoir un récipient procurant de bonnes qualités de versage dans les conditions usuelles d'utilisation de récipients de cuisine.

En pratique, pour réaliser des casseroles, on peut plus aisément déterminer l'orientation relative des parois de l'arête vive 9 en se référant à l'axe vertical moyen I-I de la casserole. Dans ce cas, l'angle D formé par l'axe vertical moyen I-I et la paroi intérieure de l'arête vive 9 est avantageusement compris entre 58 et 67°.

Dans les modes de réalisation de récipients tels que des casseroles, la tranche périphérique extérieure 8, ou tout au moins la facette périphérique supérieure 15, est légèrement inclinée vers le bas du récipient, comme le représentent les figures. Dans ces modes de réalisation, elle forme une portion de surface conique dont le sommet est dirigé vers le fond du récipient. L'angle d'inclinaison A de la facette périphérique supérieure 15 par rapport à l'axe vertical moyen I-I du récipient est avantageusement compris entre 5° et 20°, de préférence égal à 8° environ.

Dans le mode de réalisation représenté sur la figure 1, le bord périphérique supérieur 4 présente un profil constant. On pourra toutefois, sans sortir de la présente invention, prévoir un récipient dans lequel le bord périphérique supérieur présente la forme en coupe selon la présente invention sur une partie seulement de sa périphérie. On définit alors une zone de versage privilégiée.

Les formes particulières selon la présente invention du bord verseur de récipient peuvent être obtenues par usinage, par matriçage, ou tout autre moyen. Le récipient peut être réalisé en un métal tel que l'aluminium, ou toute autre matière appropriée.

La présente invention n'est pas limitée aux modes de réalisation qui ont été explicitement décrits, mais elle en inclut les diverses variantes et généralisations contenues dans le domaine des revendications ci-après.

**Revendications**

1 - Récipient à bord verseur, comprenant une jupe périphérique (1) dont le pourtour inférieur (2) se raccorde à un fond (3) et dont le pourtour supérieur est délimité par un bord périphérique supérieur (4) épais définissant une ouverture supérieure (5), le bord périphérique supérieur (4) formant, dans au moins une partie de sa périphérie, une proéminence périphérique annulaire, le bord périphérique supérieur (4) comprenant une tranche périphérique extérieure (8) formant une facette, le bord périphérique supérieur (4) et la tranche périphérique extérieure (8) se raccordant selon une arête supérieure (9) vive, la tranche périphérique extérieure (8) comprenant un décrochement anguleux (14) séparant une facette périphérique supérieure (15) et une facette périphérique inférieure (16), la facette périphérique supérieure (15) étant déportée radialement vers l'extérieur du récipient par rapport à la facette périphérique inférieure (16), caractérisé en ce que :

a) le bord périphérique supérieur (4) comprend une face intérieure (6) incurvée se raccordant vers le bas à la face intérieure (7) de la jupe périphérique (1),

b) la facette périphérique supérieure (15) présente une inclinaison vers l'extérieur telle qu'elle forme avec la surface supérieure du liquide, au début du versage, un angle (B) aigu,

c) la facette périphérique supérieure (15) présente une hauteur inférieure à 2 millimètres environ.

2 - Récipient selon la revendication 1, caractérisé en ce que la facette périphérique supérieure (15) forme, avec la surface supérieure de liquide en début de versage, un angle inférieur à 70°.

3 - Récipient selon l'une des revendications 1 ou 2, caractérisé en ce que la tranche périphérique extérieure (8) est légèrement inclinée vers le plan formant fond du récipient.

4 - Récipient selon la revendication 3, caractérisé en ce que l'angle (A) d'inclinaison de la tranche périphérique extérieure (8), par rapport à l'axe vertical moyen (I-I) du récipient, est compris entre 5 et 20°.

5 - Récipient selon l'une quelconque des revendication 1 à 4, caractérisé en ce que la facette périphérique supérieure (15) forme, avec la face intérieure (6) du bord périphérique supérieur (4), un angle (C) inférieur à 70°.

6 - Récipient selon l'une quelconque des revendications 1 à 5, caractérisé en ce que la face intérieure (6) du bord périphérique supérieur (4) présente un profil arrondi dont l'inclinaison augmente régulièrement depuis son raccordement à la jupe périphérique (1) jusqu'à son raccordement à la tranche périphérique extérieure (8).

7 - Récipient selon l'une quelconque des revendications 1 à 6, caractérisé en ce que :
- la facette périphérique extérieure (15) a une hauteur égale à 1,5 millimètres environ,
- le décrochement (14) anguleux a une profondeur égale à 10 dixièmes de millimètre environ,
- l'angle (D) formé par l'axe vertical moyen (I-I) du récipient et la paroi intérieure de l'arête supérieure vive (9) est compris entre 58° et 67°,
- l'angle (A) d'inclinaison de la facette périphérique supérieure (15) par rapport à l'axe vertical moyen (I-I) du récipient est égale à 8° environ.

EP 0 310 523 A1

Fig 1

Fig 2

Fig 3

Fig 4

EP 0 310 523 A1

Fig 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 151 727  (ARNOLD) <br> * Figure 3; page 1, colonne 1, lignes 36-43 * <br> --- | 1 | A 47 J   36/14 |
| Y | DE-C-  86 856  (PRENZLAU) <br> * Figure 1; colonne 2, lignes 1-7 * <br> --- | 1 | |
| A | EP-A-0 063 019  (JOHNSON & JORGENSON) <br> * Figure 1 * <br> --- | 1-5,7 | |
| A | FR-A-1 105 956  (SCHENLEY INDUSTRIES) <br> * Page 3, colonne 2, lignes 13-15 * <br> --- | 1,7 | |
| A | FR-A-  628 131  (ORY) <br> * En entier * <br> --- | 1 | |
| A | BE-A-  555 550  (SOCIETE ANSTALT MENTOR) <br> * Figures 4,6 * <br> ----- | 1,6 | |

|  |
|---|
| **DOMAINES TECHNIQUES RECHERCHES (Int. Cl.4)** |
| A 47 J <br> A 47 G <br> B 65 D |

Le présent rapport a été établi pour toutes les revendications

| Lieu de la recherche | Date d'achèvement de la recherche | Examinateur |
|---|---|---|
| LA HAYE | 14-12-1988 | BEUGELING G.L.H. |